# EUROPEAN PATENT SPECIFICATION

(11) **EP 3 450 751 B1**
(45) Date of publication and mention of the grant of the patent: **21.02.2024**
(21) Application number: 17188227.7
(22) Date of filing: 29.08.2017
(51) Int. Cl.: F03D 1/06, F03D 80/30, F03D 80/40

(54) **A ROTOR BLADE FOR A WIND TURBINE, THE WIND TURBINE COMPRISING ONE OR MORE ROTOR BLADES, AND A METHOD FOR DE-ICING AND/OR ANTI-ICING A TIP PART OF THE ROTOR BLADE**
ROTORBLATT FÜR EINE WINDTURBINE, WINDTURBINE MIT EINEM ODER MEHREREN ROTORBLÄTTERN UND VERFAHREN ZUR ENTEISUNG UND/ODER ZUM EISSCHUTZ EINES SPITZENTEILS DES ROTORBLATTS
PALE DE ROTOR POUR ÉOLIENNE, ÉOLIENNE COMPRENANT UNE OU PLUSIEURS PALES DE ROTOR ET PROCÉDÉ? DE DÉGIVRAGE ET/OU D'ANTIGIVRAGE DUNE PARTIE DE POINTE DE LA PALE DE ROTOR

(43) Date of publication of application: 06.03.2019
(73) Proprietor: Fortum Power and Heat Oy, 02150 Espoo (FI)
(72) Inventor: JOHANSEN, Sebastian, 01690 VANTAA (FI)
(74) Representative: Papula Oy

(56) References cited:
- EP-A1- 3 625 454
- DE-A1-102012 015 353
- DE-U1- 20 014 238
- ES-T3- 2 490 467
- US-A1- 2016 222 945

## Description

### TECHNICAL FIELD

The invention concerns in general the technical field of wind turbines. Especially the invention concerns a rotor blade for wind turbines.

### BACKGROUND

A wind turbine may be used to convert mechanical rotation into electrical power. Typically, the wind turbines are horizontal-axis wind turbines (HAWT), wherein the main rotor shaft and electrical generator are arrange at the top of a tower and pointed into the wind. Alternatively, the wind turbines may be vertical-axis wind turbines (VAWT), wherein the main rotor shaft is arranged vertically. The wind turbine comprises one or more rotor blades, typically three rotor blades.

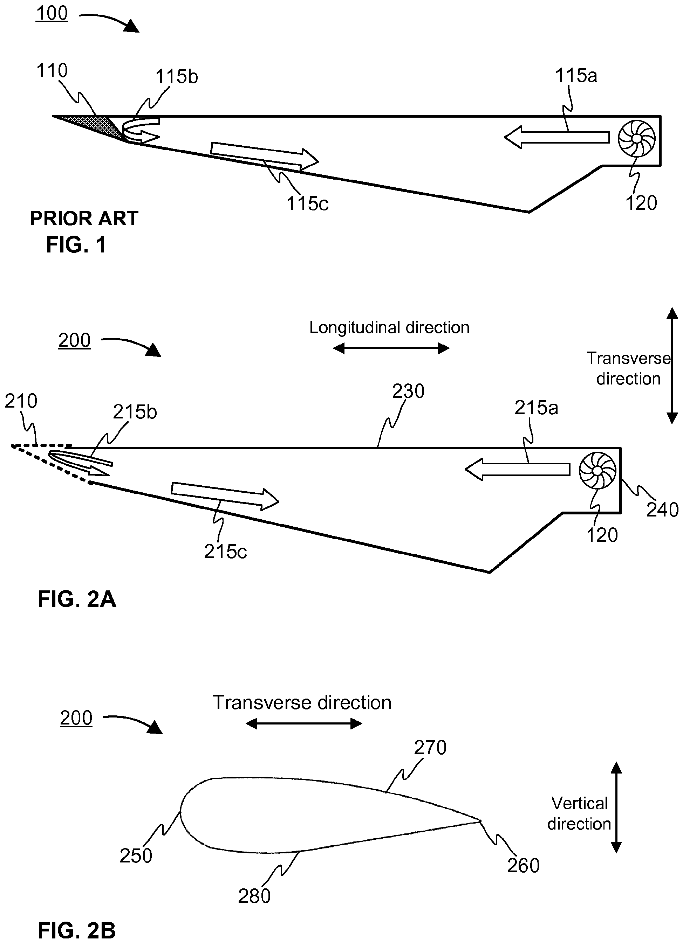

According to prior art solutions, the rotor blades may be otherwise hollow, but the tip part of the rotor blade is compact, i.e. solid. Typically, the material of the tip part of the rotor blade may be glass fiber composite. The most of the rotational torque comes from a tip part of the rotor blade. Figure 1 schematically illustrates a rotor blade 100 according to the prior art solution, wherein the tip part 110 is compact or have a significantly decreasing air-gap towards the tip.

In cold climate weather conditions outer surfaces of the rotor blades are prone to ice formation. Even small deformations caused by the ice in the rotor blade profile may have significant impact on the energy production because of the profile deformation and the drag. Moreover, the ice formation takes place especially in the leading edge of the rotor blade.

According to one prior art solution the rotor blade 100 may comprise an electric heating element (not shown in Figure 1) and a heat blower 120 for providing heat inside the rotor blade 100 in order to de-ice and/or anti-ice the outer surfaces of the rotor blade 100. The electric heating element and the heat blower 120 are typically arranged inside the rotor blade 100 in the vicinity of a rotor hub (blower) or alongside the leading edge (heating element). Because the tip part 110 of the rotor blade 100 is compact or have a partial and very narrow air-gap resulting in insufficient amount of heat available for the tip part 110 of the rotor blade 100. Moreover, in case heating elements are used they cannot be extended to the outmost part of the tip due to the increased risk of lightning strikes. The drawback of the prior art solutions are that the ice formed on the outer surface of the tip part 110 of the rotor blade 100 may not be removed. The arrows 115a-115c in Figure 1 illustrate how the heat may be transferred inside the rotor blade 100 by means of the electric heating element (not shown in Figure 1) and the blower 120.

A patent publication ES 2 490 467 T3 discloses a rotor blade of a wind power plant having a first and a second duct running inside the rotor blade for conducting an air flow and a method for de-icing a rotor blade of a wind power plant.

A patent application DE 10 2012 015353 A1 discloses a rotor blade having a rotor blade body and a rotor blade tip having a cavity, which is provided with a drainage opening for dissipating moisture present within a rotor blade body cavity.

A patent application US 2016/222945 A1 discloses a power generation apparatus provided with a lightning receiving section (tip receptor) in a tip of the blade.

A utility model application DE 200 14 238 U1 discloses a rotor blade having a solid lighting arrester at the blade tip that has also favorable heat conduction properties.

### SUMMARY

An objective of the invention is to present a rotor blade, a wind turbine, and a method for de-icing and/or anti-icing a tip part of the rotor blade. Another objective of the invention is that the rotor blade, the wind turbine, and the method enable heat to travel to the outmost tip of the rotor blade in order to at least partly remove or prevent ice formation on the tip part of the rotor blade. Still another objective of the invention is that the rotor blade may be used as a lightning receptor.

The objectives of the invention are reached by a rotor blade, a wind turbine, and a method as defined by the respective independent claims.

According to independent claim 1 a rotor blade for a wind turbine is provided, wherein the rotor blade comprises a body part attachable to a rotor hub of the wind turbine and a tip part, the body part and the tip part are attachable to each other, wherein the tip part is hollow and made of heat conductive material.

The heat conductive material of the tip part is one of the following: aluminum, aircraft aluminum, copper, carbon fiber.

The tip part and the body part may be attachable to each other by means of at least one of the following: glue, tongue and groove joint, screw, bolt, flange, T-bolt, insert, lamination.

The rotor blade further comprises heat providing means configured to provide heat towards the tip part in order to de-ice and/or anti-ice outer surfaces of the body part and the tip part, wherein the heat providing means may be arranged inside the body part substantially in the end that is attachable to the rotor hub of the wind turbine.

Alternatively or in addition, the rotor blade may further comprise one or more partition walls arranged inside the body part in a longitudinal direction of the rotor blade.

Alternatively or in addition, the tip part may comprise one or more heat conductive plates arranged in a longitudinal direction of the rotor blade. The length of the tip part may be from 1 to 5 meters.

Furthermore, the material of the tip part may further be an electrical conductive material.

According to claim 8 a wind turbine comprising one or more rotor blades described above is provided.

According to independent claim 9 a method for de-icing and/or anti-icing a tip part of a rotor blade for a wind turbine is provided, wherein the rotor blade comprises a body part attachable to a rotor hub of the wind turbine and the tip part that is hollow and made of heat conductive material, the body part and the tip part are attachable to each other, wherein the method comprises providing heat into the hollow tip part in order to de-ice and/or anti-ice outer surfaces of the tip part, wherein the heat conductive material for the tip part is aluminum, aircraft aluminum, copper or carbon fiber.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objectives and advantages thereof, will be best understood from the following description of specific embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 illustrates schematically a rotor blade according to prior art.
Figure 2A illustrates schematically an example of the rotor blade according to the invention.
Figure 2B illustrates schematically the rotor blade of Figure 2A from another view direction.
Figure 3A illustrates schematically another example of the rotor blade according to the invention.
Figure 3B illustrates schematically the rotor blade of Figure 3A from another view direction.
Figure 4 illustrates schematically another example of the rotor blade according to the invention.
Figure 5 illustrates schematically an example of the wind turbine according to the invention.

### DESCRIPTION OF SOME EMBODIMENTS

Figure 2A illustrates schematically an example of a rotor blade 200 for a wind turbine according to the invention. The rotor blade 200 comprises a body part 230 that is attachable to a rotor hub of the wind turbine. Furthermore, the rotor blade 200 comprises a tip part 210. The body part 230 and the tip part 210 are attachable to each other. The body part 230 and the tip part 210 may be attached to each other by means of at least one of the following: glue, tongue and groove joint, screw, bolt, flange, T-bolt, insert, lamination etc.. The tip part 210 may at least partly extend on top of the body part 230. Alternatively, the rotor blade 200 may be manufactured from a separate tip part 210 and a separate body part 230 so that they form a uniform rotor blade, which enables the desired properties of the rotor blade 200 that will be described later in this application. For example the tip part 210 and the body part 230 may be laminated to a single part forming the rotor blade 200.

The length of the tip part 210 may be between 1 to 5 meters. The total length of the rotor blade 200 may be between 10 to 80 meters, for example. The maximum length of the rotor blade 200 is limited by the strength and stiffness of the material of the rotor blade 200. The material of the body part 230 of the rotor blade 200 may preferably have a high stiffness, high strength, low weight, and high fatigue resistance. The material of the body part may be for example, fiber-reinforced composites comprising polyester, epoxy, glass fiber, carbon fiber, etc. The diameter of the rotor blade 200 decreases towards the tip of the rotor blade 200.

The rotor blade 200 may further comprise heat providing means configured to provide heat towards the tip part 210 of the rotor blade 200 in order to de-ice and/or anti-ice outer surfaces of the body part 230 and the tip part 210. The heat providing means may comprise an electric heating element, such as a resistor (not shown in Figure 2A), and/or a heat blower 120. The electric heating element and the heat blower 120 may be arranged inside the rotor blade 200. The heat blower 120 may be arranged in the vicinity of the rotor hub of the wind turbine and the electric heating element alongside a leading edge of the rotor blade 200. Alternatively or in addition, a residual heat from a nacelle of the wind turbine may be lead into the rotor blade 200 in order to de-ice and/or anti-ice outer surfaces of the body part 230 and the tip part 210. The heat providing means may be configured to lead the residual heat from the nacelle of the wind turbine into the rotor blade 200.

The tip part 210 is hollow and made of heat conductive material. The hollow structure and the heat conductive material of the tip part 210 enable that the heat may be transferred to the tip. In other words a sufficient amount of heat may be available for the tip part 210. Thus, the rotor blade 200 according to the invention enables also de-icing and/or anti-icing of the outer surfaces of the tip part 210. The arrows 215a-215c in Figure 2A illustrate how the heat may be transferred inside the rotor blade 200 by means of the heat providing means. Especially, the arrow 215b illustrates that the heat may be transferred inside the tip part 210. Materials having heat conductivity more than 0.04 W/mK are suitable for the tip part 210. Materials suitable for the tip part 210 according to the invention may be for example aluminum, aircraft aluminum, copper, carbon fiber etc. The heat conductive materials have better heat transfer properties to enable the heat to travel to the outmost tip part and transfer through the material is significantly better than in the prior art solutions. Furthermore, the heat conductive materials may be thinner than the glass fiber used in prior art solutions. In addition, the material of the tip part 210 may be also an electrical conductive material so that the tip part 210 may be simultaneously used also as a lightning receptor without any additional parts.

The rotor blade 200 according to the invention comprises further a leading edge 250, a trailing edge 260, an upper surface 270, and a lower surface 280. Figure 2B illustrates schematically the rotor blade 200 illustrated in Figure 2A from another view direction. A transverse direction of the rotor blade 200 extends between the leading edge 250 and the trailing edge 260. Furthermore, a longitudinal direction of the rotor blade extends between the tip part 210 and a root part 240 of the body part 230. The body part 230 may be attached to rotor hub of the wind turbine from the root part 240 of the body part 230. In addition, a vertical direction of the rotor blade 200 extends between the upper surface 270 and the lower surface 280.

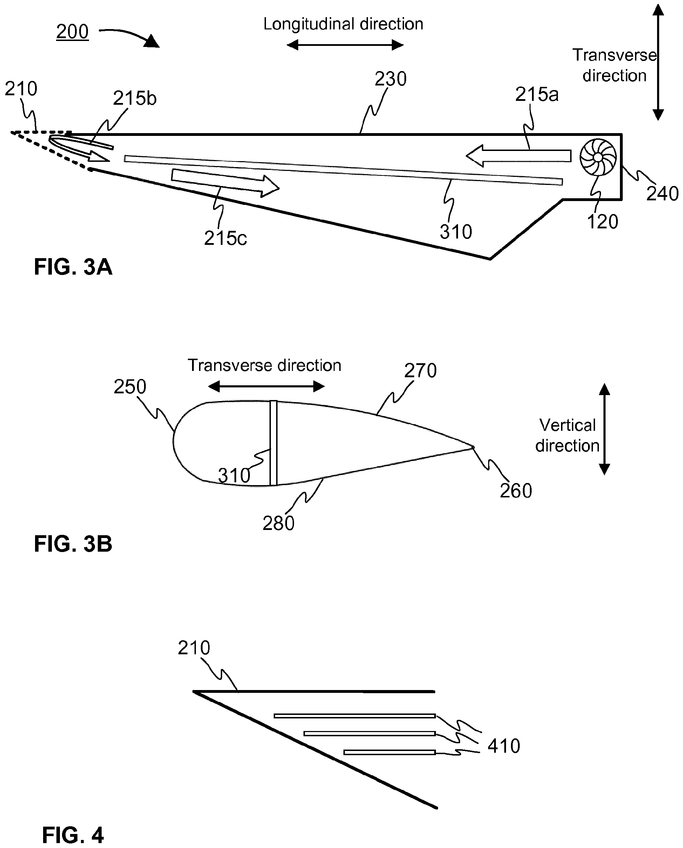

Figure 3A illustrates schematically one embodiment of the invention, wherein the rotor blade 200 may further comprise one or more partition walls 310, such as shear web, arranged inside the body part 230 in the longitudinal direction of the rotor blade 200 between the upper surface 270 and the lower surface 280. The one or more partition walls 310 may extent along the entire length of the rotor blade 200. Alternatively, the one or more partition walls 310 may extent partly the length of the rotor blade 200. The one or more partition walls 310 may increase the vortices inside the rotor blade 200 in order to improve the heat transfer and de-icing and/or anti-icing of the outer surfaces of the body part 230 and the tip part 210. Figure 3B illustrates schematically the rotor blade 200 illustrated in Figure 3A from another view direction.

Alternatively or in addition, according to one embodiment of the invention the tip part 210 may further comprise a winglet, i.e. a vertical fin at the tip of the rotor blade 200 that is turned upwards in the vertical direction. The winglet may reduce at least partly the size of the vortices shed by the tip part 210 and thus also the drag of the tip part 210, which in turn may increase the efficiency of the wind turbine. Furthermore, the winglet may reduce at least partly noise of the wind turbine.

Figure 4 illustrates another embodiment of the invention, wherein the tip part 210 may further comprise one or more heat conductive plates 410 arranged in the longitudinal direction of the rotor blade 200 between the upper surface 270 and the lower surface 280. The one or more heat conductive plates 410 may improve at least partly the heat transfer to the tip part 210. A gap is provided between the tip part 210 and the one or more heat conductive plates 410 in the longitudinal direction in order to enable the circulation of the air. The material of the heat conductive plates 410 may be at least one of the following: aluminum, aircraft aluminum, copper, carbon fiber.

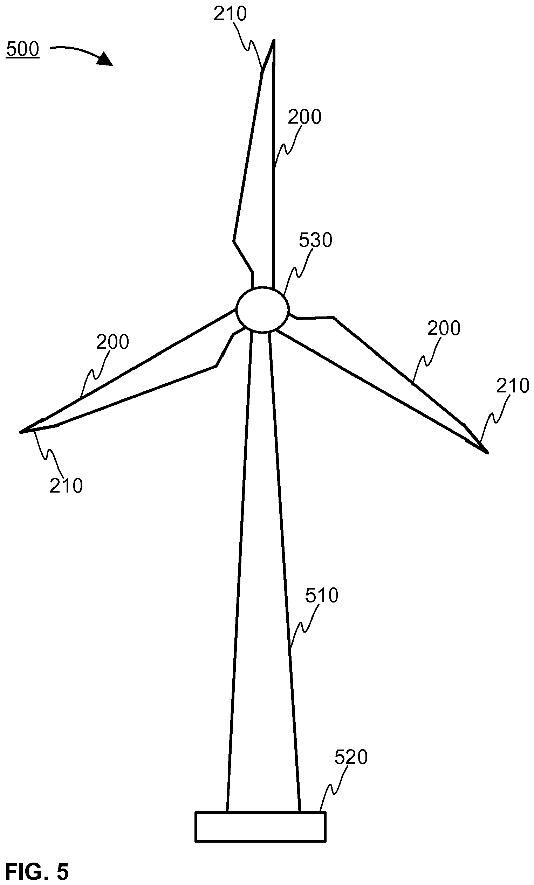

In addition, the invention relates also to a wind turbine 500 comprising one or more rotor blades 200 described above. Figure 5 illustrates an example of the wind turbine 500 according to the invention. The wind turbine 500 according to the invention is a horizontal-axis wind turbine (HAWT). The wind turbine 500 may further comprise a tower 510 on top of which a housing comprising for example a generator, a rotor shaft, a gearbox, a controller, and brake may be arranged. In addition, the wind turbine 500 may comprise a foundation 520 for the tower 510 in order to at least transfer vertical load of the wind turbine 500 to the ground. Moreover, the wind turbine 500 comprises the rotor hub 530 that may be fixed to the rotor shaft that drives the generator directly or through the gearbox. The gearbox and the generator may be accommodated in a nacelle. The one or more rotor blades 200 may be attached to the rotor hub 530 directly or via a pitch mechanism that may be used for example to adjust the angle of attack of the rotor blades 200 according to wind speed in order to control the rotational speed of the rotor blades 200. The example wind turbine 500 illustrated in Figure 5 comprises three rotor blades 200. However, the number of the rotor blades 200 is not limited to that.

Furthermore, the invention relates also to a method for de-icing and/or anti-icing the tip part 210 of the rotor blade 200 for a wind turbine described above. The method comprises providing heat into the hollow tip part 210 of the rotor blade 200 in order to de-ice and/or anti-ice outer surfaces of the tip part 210. The heat may be provided into the tip part 210 by means of the heat providing means as described above.

The specific examples provided in the description given above should not be construed as limiting the applicability and/or the interpretation of the appended claims. Lists and groups of examples provided in the description given above are not exhaustive unless otherwise explicitly stated.

## Claims

1. A rotor blade (200) for a wind turbine comprising a body part (230) attachable to a rotor hub of the wind turbine and a tip part (210), the body part (230) and the tip part (210) are attachable to each other, wherein the tip part (210) is hollow and made of heat conductive material; heat providing means configured to provide heat towards the tip part (210) of the rotor blade (200) in order to de-ice and/or anti-ice outer surfaces of the body part (230) and the tip part (210); wherein the heat conductive material for the tip part (210) is aluminum, aircraft aluminum, copper or carbon fiber.

2. The rotor blade (200) according to claim 1, wherein the tip part (210) and the body part (230) are attachable to each other by means of at least one of the following: glue, tongue and groove joint, screw, bolt, flange, T-bolt, insert, lamination.

3. The rotor blade (200) according to any of the preceding claims, wherein the heat providing means are arranged inside the body part (230) substantially in the end that is attachable to the rotor hub of the wind turbine.

4. The rotor blade (200) according to any of the preceding claims, wherein the rotor blade (200) further comprises one or more partition walls arranged inside the body part (230) in a longitudinal direction of the rotor blade (200).

5. The rotor blade (200) according to any of the preceding claims, wherein the tip part (210) comprises one or more heat conductive plates (410) arranged in a longitudinal direction of the rotor blade (200).

6. The rotor blade (200) according to any of the preceding claims, wherein the length of the tip part (210) is from 1 to 5 meters.

7. The rotor blade (200) according to any of the preceding claims, wherein the material of the tip part (210) is an electrical conductive material.

8. A wind turbine comprising one or more rotor blades (200) according to any of claims 1-7.

9. A method for de-icing and/or anti-icing a tip part (210) of a rotor blade (200) for a wind turbine, wherein the rotor blade (200) comprises a body part (230) attachable to a rotor hub of the wind turbine and the tip part (210) that is hollow and made of heat conductive material to transfer heat into the hollow tip part (210) in order to de-ice and/or anti-ice outer surfaces of the tip part (210), the body part (230) and the tip part (210) are attachable to each other, the method comprising:
- providing heat into the hollow tip part (210) in order to de-ice and/or anti-ice outer surfaces of the tip part (210); wherein the heat conductive material for the tip part (210) is aluminum, aircraft aluminum, copper or carbon fiber.

## Patentansprüche

1. Ein Rotorblatt (200) für eine Windkraftanlage umfassend ein Bauteil (230), das
an einer Rotornabe der Windkraftanlage und einem Spitzenteil (210) befestigt werden kann, wobei das Bauteil (230) und das Spitzenteil (210) aneinander befestigt werden können, wobei das Spitzenteil (210) hohl und aus einem wärmeleitendem Material hergestellt ist;
Wärmezufuhrmittel, die so konfiguriert sind, dass sie dem Spitzenteil (210) des Rotorblattes (200) Wärme zuführen, um die Außenflächen des Bauteils (230) und des Spitzenteils (210) zu enteisen und/oder Vereisung zu verhindern;
wobei das wärmeleitende Material für das Spitzenteil (210) Aluminium, Flugzeugaluminium, Kupfer oder Karbonfaser ist.

2. Das Rotorblatt (200) nach Anspruch 1, wobei das Spitzenteil (210) und das Bauteil (230) durch mindestens eines der folgenden Mittel miteinander verbunden sind: Leim, Nut-und Federverbindung, Schraube, Bolzen, Flansch, T-Bolzen, Einsatz, Laminierung.

3. Das Rotorblatt (200) nach einem der vorhergehenden Ansprüche, wobei die Wärmezufuhrmittel im Wesentlichen an dem Ende innerhalb des Bauteils (230) angeordnet sind, das an der Rotornabe der Windkraftanlage befestigt werden kann.

4. Das Rotorblatt (200) nach einem der vorhergehenden Ansprüche, wobei das Rotorblatt (200) außerdem eine oder mehrere Trennwände umfasst, die innerhalb des Bauteils (230) in Längsrichtung des Rotorblatts (200) angeordnet sind.

5. Das Rotorblatt (200) nach einem der vorhergehenden Ansprüche, wobei das Spitzenteil (210) eine oder mehrere wärmeleitende Platten (410) umfasst, die in Längsrichtung des Rotorblatts (200) angeordnet sind.

6. Das Rotorblatt (200) nach einem der vorhergehenden Ansprüche, wobei die Länge des Spitzenteils (210) von 1 bis 5 Meter beträgt.

7. Das Rotorblatt (200) nach einem der vorhergehenden Ansprüche, wobei das Material des Spitzenteils (210) ein elektrisch leitendes Material ist.

8. Eine Windkraftanlage umfassend eines oder mehrere Rotorblätter (200) gemäß einer der der Ansprüche 1-7.

9. Ein Verfahren zum Enteisen und/oder Verhindern des Vereisens eines Spitzenteils (210) eines Rotorblattes (200) für eine Windkraftanlage, wobei das Rotorblatt (200) ein Bauteil (230) umfasst, das an einer Rotornabe der Windkraftanlage und an das Spitzenteil (210) befestigt werden kann, wobei das Spitzenteil hohl und aus wärmeleitendem Material hergestellt ist, um Wärme in das hohle Spitzenteil (210) zu leiten zum Enteisen und/oder zum Verhindern des Vereisens der Außenflächen des Spitzenteils (210), wobei das Bauteil (230) und das Spitzenteil (210) aneinander befestigt werden können, wobei das Verfahren umfasst:
- Zuführung von Wärme in das hohle Spitzenteil (210) zur Enteisung und/oder Verhindern des Vereisens der Außenflächen des Spitzenteils (210); wobei das wärmeleitende Material für das Spitzenteil (210) Aluminium, Flugzeugaluminium, Kupfer oder Karbonfaser ist.

## Revendications

1. Pale de rotor (200) pour une éolienne comprenant une partie de corps (230) pouvant être fixée à un moyeu de rotor de l'éolienne et une partie de pointe (210), la partie de corps (230) et la partie de pointe (210) peuvent être fixées l'une à l'autre, dans laquelle la partie de pointe (210) est creuse et réalisée en un matériau thermoconducteur ;
des moyens de fourniture de chaleur configurés pour fournir de la chaleur vers la partie de pointe (210) de la pale de rotor (200) afin de réaliser le dégivrage et/ou l'antigivrage des surfaces extérieures de la partie de corps (230) et de la partie de pointe (210) ; dans laquelle le matériau thermoconducteur pour la partie de pointe (210) est de l'aluminium, de l'aluminium aéronautique, du cuivre ou une fibre de carbone.

2. Pale de rotor (200) selon la revendication 1, dans laquelle la partie de pointe (210) et la partie de corps (230) peuvent être fixées l'une à l'autre au moyen d'au moins un de ce qui suit : colle, assemblage à rainure et languette, vis, boulon, bride, boulon en T, insert, stratification.

3. Pale de rotor (200) selon l'une quelconque des revendications précédentes, dans laquelle les moyens de fourniture de chaleur sont agencés à l'intérieur de la partie de corps (230) sensiblement dans l'extrémité qui peut être fixée au moyeu de rotor de l'éolienne.

4. Pale de rotor (200) selon l'une quelconque des revendications précédentes, dans laquelle la pale de rotor (200) comprend en outre une ou plusieurs parois de séparation agencées à l'intérieur de la partie de corps (230) dans une direction longitudinale de la pale de rotor (200) .

5. Pale de rotor (200) selon l'une quelconque des revendications précédentes, dans laquelle la partie de pointe (210) comprend une ou plusieurs plaques thermoconductrices (410) agencées dans une direction longitudinale de la pale de rotor (200).

6. Pale de rotor (200) selon l'une quelconque des revendications précédentes, dans laquelle la longueur de la partie de pointe (210) est de 1 à 5 mètres.

7. Pale de rotor (200) selon l'une quelconque des revendications précédentes, dans laquelle le matériau de la partie de pointe (210) est un matériau électroconducteur.

8. Eolienne comprenant une ou plusieurs pales de rotor (200) selon l'une quelconque des revendications 1 à 7.

9. Procédé de dégivrage et/ou d'antigivrage d'une partie de pointe (210) d'une pale de rotor (200) pour une éolienne, dans lequel la pale de rotor (200) comprend une partie de corps (230) pouvant être fixée à un moyeu de rotor de l'éolienne et la partie de pointe (210) qui est creuse et fabriquée en matériau thermoconducteur pour transférer de la chaleur dans la partie de pointe (210) creuse afin de réaliser le dégivrage et/ou l'antigivrage des surfaces extérieures de la partie de pointe (210), la partie de corps (230) et la partie de pointe (210) peuvent être fixées l'une à l'autre, le procédé comprenant :
- la fourniture de chaleur dans la partie de pointe (210) creuse afin de réaliser le dégivrage et/ou l'antigivrage des surfaces extérieures de la partie de pointe (210) ; dans lequel le matériau thermoconducteur pour la partie de pointe (210) est de l'aluminium, de l'aluminium aéronautique, du cuivre ou une fibre de carbone.
